# EUROPEAN PATENT SPECIFICATION

(11) **EP 0 458 630 B1**
(45) Date of publication and mention of the grant of the patent: **13.07.1994**
(21) Application number: 91304660.3
(22) Date of filing: 22.05.1991
(51) Int. Cl.: B23K 20/12

(54) **Friction bonding**
Reibschweissung
Soudage à friction

(30) Priority: 24.05.1990 GB 9011605
(43) Date of publication of application: 27.11.1991
(73) Proprietor: ROLLS-ROYCE plc, London, SW1E 6AT (GB)
(72) Inventor: Daines, John Walker, Bristol, England (GB)
(74) Representative: Bird, Vivian John

(56) References cited:
- EP-A- 0 290 134
- DE-A- 2 245 599
- GB-A- 2 237 758
- US-A- 3 512 792
- US-A- 3 584 777

## Description

The invention relates to apparatus for performing friction bonding operations. In particular, it concerns apparatus for performing a non-rotational frictional bonding operation.

Prior art in the field of friction bonding is to be found in US-A-3,584,777 (Loyd) and EP-A1-0,290,134 (Rolls-Royce plc).

US-A-3,584,777 discloses a tailstock for feeding a workpiece in a rotary friction welding application. The work is firmly held in blocks which are biased together by hydraulic and/or spring means. The block pressure is temporarily relaxed when fresh work is fed into the rear of the tailstock from a hopper and delivery means.

EP-A1-0,290,134 concerns the friction welding of a blade to a disk by rubbing the blade in an oscillatory manner in an arcuate path on the disk, and relates in particular to a linkage of pivots and levers whereby the oscillatory movement of the blade may be brought to a sudden stop at a precise location on the disk by bringing one pivot into alignment with another.

US-A-3,584,777 and EP-A1-0,290,134 do not address the problem of linear friction bonding, which is that of holding a workpiece securely as the frictional forces are suddenly reversed. In the rotary friction welding of US 3,584,777 these sudden reversals do not occur.

An embodiment of the invention is described in detail hereinafter is particularly concerned with the manufacture or repair of a bladed disc, sometimes known as a BLISK. A bladed disc comprises a disc or wheel on the periphery of which there is attached or carried a multiplicity of blades. In a conventional rotor assembly the blades are attached to a disc or wheel by interlocking root fixtures. In bladed discs the blades are either formed integrally with the disc or are non-dismountably attached thereto. The present invention finds application for the manufacture or repair of assemblies in which the inter-blade spacing is very close and the blades may also be small. Such an example may be in the repair of a high pressure compressor bladed disc rotor.

Small blades are also relatively fragile and may be easily damaged during a friction bonding operation which involves very large forces to produce the required frictional heating effects. Therefore, it is preferred to work with a blade blank or preform and to finish the blade to its final shape after bonding.

According to the invention in its broadest aspect a blade or blade preform is attached to the rim of a bladed disc in a non-rotational friction bonding operation.

According to one aspect of the present invention apparatus for linear friction bonding a first component, defining a longitudinal direction to a second component, includes a generally C-shaped frame member having a pair of longitudinally extending limb members arranged either side of the first component and jaw pieces adapted to positively engage opposite sides of the first component, and is characterised in that each limb member is provided with a channel extending longitudinally from its distal end and facing the corresponding channel of the other limb member, each channel being shaped to have a tapering cross-section as it extends longitudinally from its respective distal end, and each jaw piece is adapted to slide longitudinally within and to cooperate with a respective channel so that when the jaw pieces move in the channels away from the distal ends of the limb members the jaw pieces tend to grip the first component more positively.

The invention and how it may be carried into practice will now be described in greater detail with reference by way of example to the accompanying drawings, in which:
Figure 1 shows a schematic diagram of a blade replacement operation viewed in a radial direction,
Figure 2 shows a view in the direction of arrows AA in figure 1.

Referring now to the drawings, in which like parts have been given like references, the example illustrated involves the repair of a bladed disc, or BLISK, using a linear friction bonding operation.

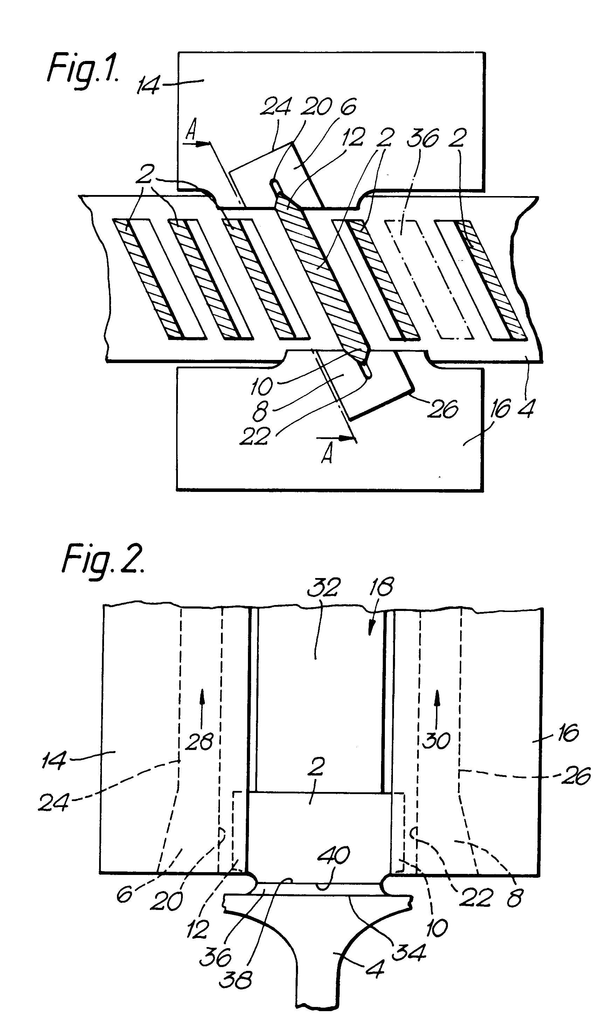

A blade preform or blank 2 is bonded to the periphery of disc 4, a fragment of which is shown in the drawing, at a predetermined location. Figure 1 shows such a blade preform 2 clamped between jaw pieces 6,8 at the start of a bonding operation.

The preform 2 consists of solid block of metal of appropriate shape and size. At the leading and trailing edge regions 10,12 a considerable amount of sacrificial metal is left by which the jaw pieces 6,8 grip the preform 2. The edges are formed with angled faces for engagement by the jaw pieces 6,8. In figure 1 the radially outer ends of preforms 2 are shown hatched for easier reference. After finishing of the blade airfoil shape these end faces form the blade tip faces.

The jaw pieces 6,8 are moveably located in channels 24,26 in the inner faces of limbs 14,16 respectively of a C-shaped frame 18. The jaw pieces 6,8 have angled grip faces, V-shaped in plan to grip the complementary angled faces on the leading and trailing edges of the preform 2. At the apex of the angled faces relatively deep grooves 20,22 are cut into the jaw pieces to provide the angled faces with a degree of resilience in gripping the preform.

The jaw pieces 6,8 are located, as mentioned above, in channels 24,26 formed in the inner faces of the frame limbs 14,16. The jaw pieces are slideable longitudinally in the channels 24,26 in the direction of arrows 28,30.. Towards the distal end of each limb 14,16 the base of the channel and the abutting face of the respective jaw piece 6,8 are angled obliquely with respect to the longitudinal direction of movement 28,30. These angled surfaces converge towards the upper or closed part of the clamping frame so that by drawing the jaw pieces 6,8 upwardly in figure 2, in the direction of arrows 28,30, their grip on the blade preform 2 is tightened.

The jaw pieces 6,8 may extend longitudinally in the directions of arrows 28,30 as shown in the drawings or may be attached to tensile members. The remote ends of the jaw piece extensions or the tensile members are connected to hydraulic tensioning means (not shown) which is energised to draw the jaw pieces upwardly to grip the preform. Clearly the clamping means may be released from the preform after a bonding operation by relaxing the tensioning force in the jaw pieces.

The moveable clamping frame 18 also carries a ram 32 which bears against the tip face of blade preform 2 and applies the required upset force to effect bonding at the end of the frictional heating phase of the operation.

It is preferred to replace a blade belonging to a BLISK rotor using this method as follows. First, the old or damaged blade is removed just above the peripheral surface 34 of the disc rim leaving a stub portion 36. The upper surface 38 of this stub is made flat and the foot of the replacement blade preform is bonded to it. The preform 2 is at least longer than the stub 36 due to the presence of the sacrificial gripping regions 10 and 12. It may be slightly wider also. The lower margin of the preform is therefore preferably chamfered so that lower surface 40 matches upper surface 38 of stub 36. The surface 40 may be made shaped for better control of the frictional heating phase.

During the frictional heating phase of a bonding operation the clamping means containing the preform 2 is moved back and forth. Several directions of movement are available in the plane of the joint. The amplitude of this movement is small, generally only a few millimetres is required and is at a low frequency. For maximum rigidity the jaws of the clamping means are wider than the inter-blade spacing. Because of the resulting overlap the distance between the jaws must provide sufficient clearance for the chosen motion. The extra distance is easily provided for in the edge regions 10,12 on the preform 2. Thus, during the whole of a bonding operation clearance is maintained between the clamping means and adjacent blade tips.

For maximum lateral rigidity the jaw pieces 6,8 are preferably flush with the face of the clamping means. Where the blades are closely spaced the clearance distance must be maintained to avoid blade damage. It follows, therefore, that the edge regions 10,12 of a blade preform which are intended to be engaged by the clamping means must be removed after bonding and before another blade may be bonded at an adjacent location.

Alternatively, a number of blade preforms may be bonded sequentially at locations sufficiently far apart. In the illustrated case the minimum spacing is alternate locations. A whole BLISK could be manufactured, if desired, in this way by bonding blades at, say, alternate locations in a first operation, subsequently removing surplus metal and then bonding the remaining blades in a further operation.

Finally, after the bonding operation, or operations if more than one blade preform is attached, the preform or preforms are finished to final blade airfoil shape by a further manufacturing operation. Surplus metal including that upset during bonding is removed at this stage, for example, by electro-chemical machining.

## Claims

1. An apparatus for linear friction bonding a first component (2), defining a longitudinal direction (28,30) to a second component (4), the apparatus including a generally C-shaped frame member (18) having a pair of longitudinally extending limb members (14,16) arranged either side of the first component (2) and jaw pieces (6,8) adapted to positively engage opposite sides of the first component (2), characterised in that each limb member (14,16) is provided with a channel (24,26) extending longitudinally from its distal end and facing the corresponding channel (24,26) of the other limb member (14,16), each channel (24,26) being shaped to have a tapering cross-section as it extends longitudinally from its respective distal end, and each jaw piece (6,8) is adapted to slide longitudinally within and to cooperate with a respective channel (24,26) so that when the jaw pieces (6,8) move in the channels (24,26) away from the distal ends of the limb members (14,16) the jaw pieces (6,8) tend to grip the first component (2) more positively.

2. An apparatus as claimed in claim 1 characterised in that each jaw piece (6,8) is provided with an angled grip face, V-shaped in plan, to grip a respective complementary angled face of the component (2).

3. An apparatus as claimed in claim 2 characterised in that a groove (20,22) is provided in each jaw piece (6,8) at the apex of its respective angled grip face, so as to provide the angled grip face with a degree of resilience in gripping the first component (2) when the jaw piece (6,8) moves in, and cooperates with, the taper of its respective channel (24,26).

4. An apparatus as claimed in any preceding claim characterised in that the C-shaped frame member (18) is provided with ram means (32) adapted to bear longitudinally against the first component (2) and to apply a required force to effect bonding between the first component (2) an the second component (4).

## Patentansprüche

1. Vorrichtung zum Verbinden eines ersten Bauteils (2), das eine Längsrichtung (28, 30) definiert, mit einem zweiten Bauteil (4) durch geradlinige Reibschweißung, wobei die Vorrichtung einen etwa C-förmigen Rahmenkörper (18) mit zwei in Längsrichtung verlaufenden Schenkeln (14, 16), die beiderseits des ersten Bauteils (2) angeordnet sind, und Backenstücke (6, 8) aufweist, die für ein Ergreifen des ersten Bauteils (2) an gegenüberliegenden Seiten ausgebildet sind, dadurch gekennzeichnet, daß jeder Schenkel (14, 16) mit einer von seinem distalen Ende aus längsverlaufenden Nut (24, 26) versehen ist, die der entsprechenden Nut (24, 26) des anderen Schenkels (14, 16) zugewandt ist, wobei jede Nut (24, 26) so gestaltet ist, daß sie einen über ihrem Längsverlauf von dem betreffenden distalen Ende aus sich verjüngenden Querschnitt hat, und daß jedes Backenstück (6, 8) gleitend längsverschiebbar mit der entsprechenden Nut (24, 26) zusammenwirkt, so daß, wenn die Backenstücke (6, 8) in den Nuten (24, 26) von den distalen Enden der Schenkel (14, 16) weg verschoben werden, die Backenstücke (6, 8) das erste Bauteil (2) fester ergreifen.

2. Vorrichtung nach Anspruch 1, dadurch gekennzeichnet, daß jedes Backenstück (6, 8) mit einer abgewinkelten Griffläche versehen ist, die in der Draufsicht V-förmig ist, um eine entsprechend komplementär abgewinkelte Fläche des Bauteils (2) zu ergreifen.

3. Vorrichtung nach Anspruch 2, dadurch gekennzeichnet, daß in jedem Backenstück (6, 8) am Scheitel der betreffenden abgewinkelten Griffläche eine Nut (20, 22) vorgesehen ist, um die abgewinkelte Griffläche mit einem gewissen Maß an Elastizität beim Ergreifen des ersten Bauteils (2) auszustatten, wenn das Backenstück (6, 8) sich in der betreffenden Nut (24, 26) verschiebt und mit deren Verjüngung zusammenwirkt.

4. Vorrichtung nach einem der vorhergeheden Ansprüche, dadurch gekennzeichnet, daß der C-förmige Rahmenkörper (18) mit einem Stößel (32) versehen ist, der in Längsrichtung an dem ersten Bauteil (2) anlegbar ist, um eine erforderliche Kraft zur Bewirkung der Verschweißung zwischen dem ersten Bauteil (2) und dem zweiten Bauteil (4) zu bewirken.

## Revendications

1. Appareil de soudage à friction linéaire d'un premier composant (2), définissant une direction longitudinale (28, 30), sur un deuxième composant (4), l'appareil comprenant un châssis (18) de forme générale en C, doté d'une paire de branches (14,16) s'étendant longitudinalement, disposées de chaque côté du premier composant (2), et de mâchoires (6, 8), adaptées pour venir en contact positif avec les côtés opposés du premier composant (2), caractérisé en ce que chaque branche (14, 16) est pourvue d'un canal (24, 26), s'étendant longitudinalement depuis son extrémité distale et tourné vers le canal (24, 26) correspondant de l'autre branche (14, 16), chaque canal (24, 26) étant d'une forme à section transversale allant en s'effilant sur sa longueur, en partant de son extrémité distale respective, et chaque mâchoire (6, 8) étant adaptée pour coulisser longitudinalement à l'intérieur de, et coopérer avec un canal (24, 26) respectif, de sorte que, lorsque les mâchoires (6,8) se déplacent dans les canaux (24, 26) en s'écartant des extrémités distales des branches (14, 16), les mâchoires (6, 8) tendent à saisir le premier composant (2) de façon plus positive.

2. Appareil selon la revendication 1, caractérisé en ce que chaque mâchoire (6, 8) est pourvue d'une surface de prise angulaire, ayant en vue en plan la forme d'un V, pour saisir une face angulaire respective, formant un angle complémentaire du composant (2).

3. Appareil selon la revendication 2, caractérisé en ce qu'une rainure (20, 22) est ménagée dans chaque mâchoire (6,8) au sommet de sa face de prise angulaire respective, de façon à doter la face de prise angulaire d'un certain degré d'élasticité au moment de la saisie du premier composant (2), lorsque la mâchoire (6,8) s'avance dans, et coopère avec la partie effilée de son canal (24, 26) respectif.

4. Appareil selon l'une quelconque des revendications précédentes, caractérisé en ce que le châssis (18) en forme de C est pourvu de moyens du genre vérin (32), adaptés pour porter longitudinalement contre le premier composant (2) et pour appliquer la force nécessaire en vue d'effectuer un soudage entre le premier composant (2) et le second composant (4).
